# EUROPEAN PATENT SPECIFICATION

(11) **EP 4 446 839 B1**
(45) Date of publication and mention of the grant of the patent: **27.05.2026**
(21) Application number: 24169016.3
(22) Date of filing: 08.04.2024
(51) Int. Cl.: G05B 23/02, G07C 5/08

(54) **DTC RULEBOOK GENERATION SYSTEM AND METHOD**
DTC-REGELBUCHERZEUGUNGSSYSTEM UND -VERFAHREN
SYSTÈME ET PROCÉDÉ DE GÉNÉRATION DE MANUEL DE RÈGLES DTC

(30) Priority: 09.04.2023 US 202363458132 P
(43) Date of publication of application: 16.10.2024
(73) Proprietor: Questar Auto Technologies Ltd., 4672519 Herzelia (IL)
(72) Inventor: APARTSIN, Sasha, 7630227 Rehovot (IL); HENRICHS, Kevin, 63796 Kahl (DE); KOSSACZKY, Igor, 42117 Wuppertal (DE); KOVALETS, Sophia, 25070 Odolena Voda (CZ); MAVLIUTOV, Yaroslav, Lviv City (UA); KORCHAHIN, Ivan, Kyiv (UA); SHALEV, Yuval, 4434144 Kfar Saba (IL)
(74) Representative: ABG Intellectual Property Law, S.L.

(56) References cited:
- EP-A1- 4 033 413
- US-A1- 2021 016 786

## Description

### TECHNICAL FIELD

The present invention relates to the field of Diagnostic Trouble Code (DTC) rulebook generation system and method.

### BACKGROUND

On-Board Diagnostics (OBD) is a term referring to a vehicle's self-diagnostic and reporting capability. A primary benefit of this is that OBD systems give the vehicle owner or repair technician access to the status of the various vehicle sub-systems. Modern OBD implementations use a standardized digital communications port to provide real-time data in addition to a standardized series of Diagnostic Trouble Codes (DTCs), which allow a person to rapidly identify and remedy malfunctions within the vehicle.

Current Vehicle Health Management (VHM) solutions are based on preventive and reactive maintenance solutions - they provide information only after the malfunction has already occurred. There is a thus a need for a predictive VHM solution that could discover DTC patterns within telemetric data of a vehicle for early detection of malfunctions. These DTC patterns should be combined into a set of rules, namely DTC rulebooks, that will be used by technicians for diagnostics and preventative actions.

Thus, there is a need for a novel technique for a DTC rulebook generation system and method.

Document US 2021/0016786 A1 discloses a computer-implemented method of predicting vehicle failures.

### GENERAL DESCRIPTION

In accordance with a first aspect of the presently disclosed subject matter, there is provided a Diagnostic Trouble Code (DTC) rulebook generation system according to claim 1.

In some cases, at least one of the machine learning models are one or more of: a logistic regression model, sequencing model, neural network model, or a gradient boosting tree model.

In some cases, at least one of the machine learning models is a logistic regression model and wherein at least one of the DTC rules is a scorecard comprising: one or more DTC associated with the ride records used to train the logistic regression model.

In some cases, at least one of the machine learning models is a sequencing model and wherein at least one of the DTC rules is a sequence rule associated with a sequence of DTC identified by the sequencing model to occur in ride records that are labeled as faulty rides and not occur in ride records that are labeled as healthy rides.

In some cases, at least one ride record of the ride records comprises telematics trace data records having timespan that is above a timespan threshold.

In some cases, one or more subsets of the labeled ride records are one or more of: subsets of data of the labeled ride records, or subsets of features of the labeled ride records.

In some cases, the generation of the at least one DTC rulebook is assisted by user feedback given by a user of the DTC rulebook generation system.

In some cases, the user feedback is utilized for active learning procedure, wherein the labeled ride records are updated in accordance with the user feedback.

In accordance with a second aspect of the presently disclosed subject matter, there is provided a Diagnostic Trouble Code (DTC) rulebook generation according to claim 7.

In some cases, at least one of the machine learning models are one or more of: a logistic regression model, sequencing model, neural network model, or a gradient boosting tree model.

In some cases, at least one of the machine learning models is a logistic regression model and wherein at least one of the DTC rules is a scorecard comprising: one or more DTC associated with the ride records used to train the logistic regression model.

In some cases, at least one of the machine learning models is a sequencing model and wherein at least one of the DTC rules is a sequence rule associated with a sequence of DTC identified by the sequencing model to occur in ride records that are labeled as faulty rides and not occur in ride records that are labeled as healthy rides.

In some cases, at least one ride record of the ride records comprises telematics trace data records having timespan that is above a timespan threshold.

In some cases, one or more subsets of the labeled ride records are one or more of: subsets of data of the labeled ride records, or subsets of features of the labeled ride records.

In some cases, the generation of the at least one DTC rulebook is assisted by user feedback given by a user of the DTC rulebook generation system.

In some cases, the user feedback is utilized for active learning procedure, wherein the labeled ride records are updated in accordance with the user feedback.

In accordance with a third aspect of the presently disclosed subject matter, there is provided a non-transitory computer readable storage medium according to claim 13.

### BRIEF DESCRIPTION OF THE DRAWINGS

In order to understand the presently disclosed subject matter and to see how it may be carried out in practice, the subject matter will now be described, by way of non-limiting examples only, with reference to the accompanying drawings, in which:
**Fig. 1** is a schematic illustration of an exemplary conditional DTC rule, in accordance with the presently disclosed subject matter;
**Fig. 2** is a block diagram schematically illustrating one example of a DTC rulebook generation system, in accordance with the presently disclosed subject matter; and
**Fig. 3** is a flowchart illustrating an example of a sequence of operations carried out for performing a DTC rulebook generation process, in accordance with the presently disclosed subject matter.

### DETAILED DESCRIPTION

In the following detailed description, numerous specific details are set forth in order to provide a thorough understanding of the presently disclosed subject matter. However, it will be understood by those skilled in the art that the presently disclosed subject matter may be practiced without these specific details. In other instances, well-known methods, procedures, and components have not been described in detail so as not to obscure the presently disclosed subject matter.

In the drawings and descriptions set forth, identical reference numerals indicate those components that are common to different embodiments or configurations.

Unless specifically stated otherwise, as apparent from the following discussions, it is appreciated that throughout the specification discussions utilizing terms such as "obtaining", "identifying", "extracting", "labeling", "calculating", "generating", "alerting", "training", "determining" or the like, include action and/or processes of a computer that manipulate and/or transform data into other data, said data represented as physical quantities, e.g., such as electronic quantities, and/or said data representing the physical objects. The terms "computer", "processor", "processing resource", "processing circuitry", and "controller" should be expansively construed to cover any kind of electronic device with data processing capabilities, including, by way of non-limiting example, a personal desktop/laptop computer, a server, a computing system, a communication device, a smartphone, a tablet computer, a smart television, a processor (e.g. digital signal processor (DSP), a microcontroller, a field programmable gate array (FPGA), an application specific integrated circuit (ASIC), etc.), a group of multiple physical machines sharing performance of various tasks, virtual servers co-residing on a single physical machine, any other electronic computing device, and/or any combination thereof.

The operations in accordance with the teachings herein may be performed by a computer specially constructed for the desired purposes or by a general-purpose computer specially configured for the desired purpose by a computer program stored in a non-transitory computer readable storage medium. The term "non-transitory" is used herein to exclude transitory, propagating signals, but to otherwise include any volatile or nonvolatile computer memory technology suitable to the application.

As used herein, the phrase "for example," "such as", "for instance" and variants thereof describe non-limiting embodiments of the presently disclosed subject matter. Reference in the specification to "one case", "some cases", "other cases" or variants thereof means that a particular feature, structure or characteristic described in connection with the embodiment(s) is included in at least one embodiment of the presently disclosed subject matter. Thus, the appearance of the phrase "one case", "some cases", "other cases" or variants thereof does not necessarily refer to the same embodiment(s).

It is appreciated that, unless specifically stated otherwise, certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

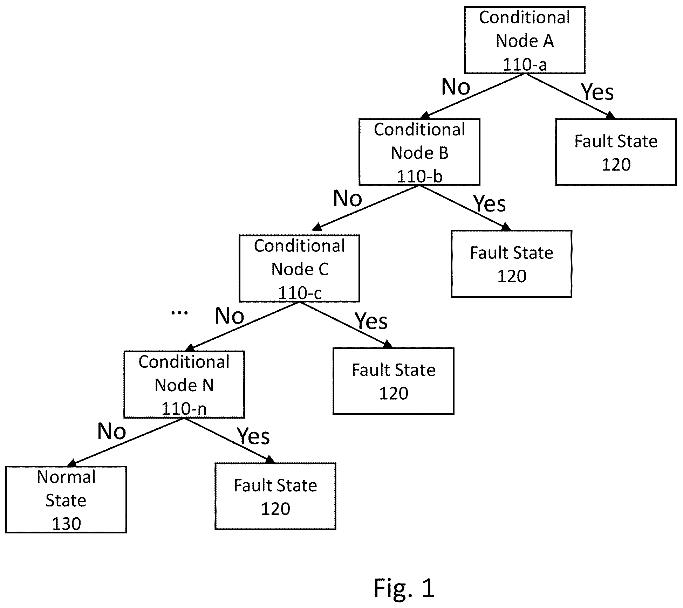

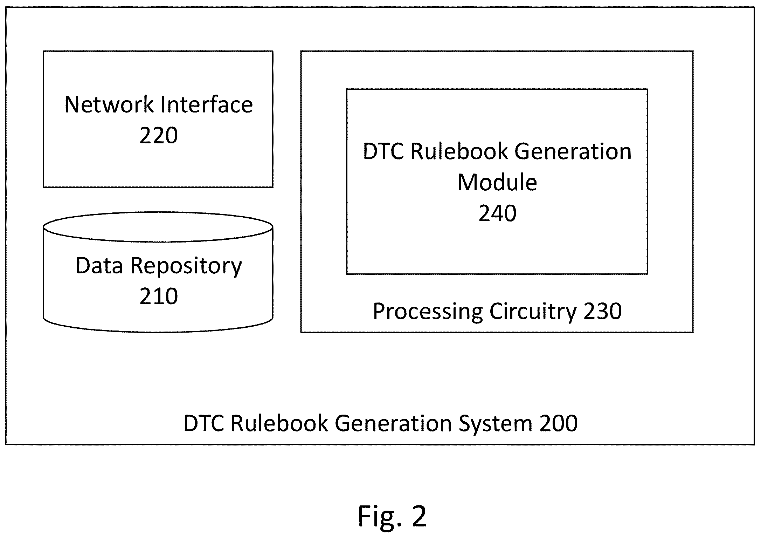

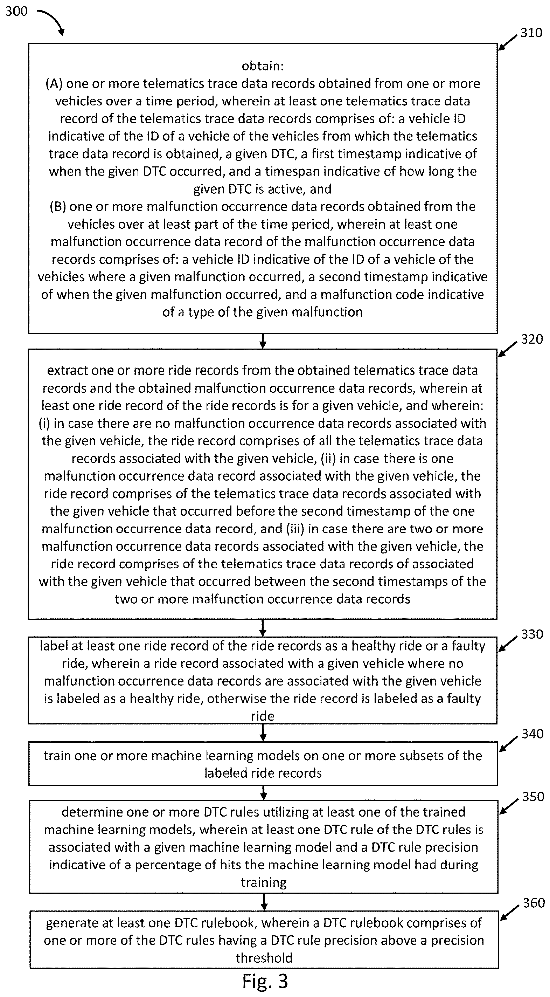

In embodiments of the presently disclosed subject matter, fewer, more and/or different stages than those shown in **Fig. 3** may be executed. In embodiments of the presently disclosed subject matter one or more stages illustrated in **Fig. 3** may be executed in a different order and/or one or more groups of stages may be executed simultaneously. **Figs. 1** **and** **2** illustrate a general schematic of the system architecture in accordance with an embodiment of the presently disclosed subject matter. Each module in **Figs. 1** **and** **2** can be made up of any combination of software, hardware and/or firmware that performs the functions as defined and explained herein. The modules in **Figs. 1** **and** **2** may be centralized in one location or dispersed over more than one location. In other embodiments of the presently disclosed subject matter, the system may comprise fewer, more, and/or different modules than those shown in **Figs. 1** **and** **2****.**

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that may be executed by the system and should be applied mutatis mutandis to a non-transitory computer readable medium that stores instructions that may be executed by the system.

Any reference in the specification to a non-transitory computer readable medium should be applied mutatis mutandis to a system capable of executing the instructions stored in the non-transitory computer readable medium and should be applied mutatis mutandis to method that may be executed by a computer that reads the instructions stored in the non-transitory computer readable medium.

On-Board Diagnostics (OBD) is a term referring to a vehicle's self-diagnostic and reporting capability. A primary benefit of this is that OBD systems give the vehicle owner or repair technician access to the status of the various vehicle sub-systems. Modern OBD implementations use a standardized digital communications port to provide real-time data in addition to a standardized series of Diagnostic Trouble Codes (DTCs), also referred to as engine fault codes, which allow a person to rapidly identify and remedy malfunctions within the vehicle.

DTCs are used to identify and diagnose malfunctions in a vehicle or piece of heavy equipment. When a vehicle's OBD system detects a problem, it activates the corresponding trouble code. Technicians rely on these codes to diagnose and resolve problems. Originally, OBD systems varied from manufacturer to manufacturer. With OBD-II systems (light- and medium-duty vehicles from 1996 onward), the Society of Automotive Engineers (SAE) International created a standard DTC list for all manufacturers. In heavy-duty vehicles and large equipment (like trucks, buses, mobile hydraulics, etc.), the SAE has established a common language defining how manufacturers understand communication received from Engine Control Units (ECUs). There are several reasons that your vehicle's check engine light can be illuminated, but not all of them are equally important. The critical nature of a code is driven by what is affected in the malfunction. DTC codes can fall into two categories: critical and non-critical codes. Critical DTC codes need urgent attention because they can cause immediate and severe damage. A good example of this could be a high engine temperature. Non-critical codes aren't urgent, but it's crucial that DTC codes are correctly diagnosed. Before DTCs became commonplace, diagnosing issues could be time-consuming. With OBD-II, vehicles can basically monitor themselves and alert drivers to potential problems using indicator lights. These indicator lights identify things like: Engine temperature warning, Tire pressure warning, Oil pressure warning, Brake pad warning. Some indicator lights indicate multiple problems. For instance, the brake system light could suggest that the parking brake is on, the brake fluid is low, or that there is an Antilock Braking System (ABS) issue. The check engine or Malfunction Indicator Light (MIL), for example, indicates that the vehicle's computer has set a DTC, requiring a diagnostic tool to read. A DTC comes in a string of five characters. For example, a given DTC code can be: "P0575". In this example, the first letter tells us which of the four main parts is at fault: P = Powertrain, B = Body, C = Chassis and U = Network. The second indicates whether it is a generic OBD-II code or a manufacturer's code (If a manufacturer feels there isn't a generic code covering a specific fault, they can add their own.) A zero denotes a generic code. The third character alerts us which vehicle's system is at fault. Codes can include: 1 = Fuel and Air Metering; 2 = Fuel and Air Metering (injector circuit malfunction specific); 3 = Ignition System or Misfire; 4 = Auxiliary Emissions Controls; 5 = Vehicle Speed Control and Idle Control System; 6 = Computer Auxiliary Outputs; 7, 8, 9 = Various transmission and Gearbox faults; and A, B, C = Hybrid Propulsion Faults. The last two characters tell us the specific fault. These helps pinpoint exactly where the problem is located and which part needs attention. For example, in the case of P0575, we know that it's a generic OBD-II powertrain fault. We also know that the specific fault relates to the vehicle speed control or idle control system. By consulting the list of OBD-II codes, we discover that it's a problem with the cruise control input circuit. There are more than 5,000 ODB-II and manufacturer-specific codes.

J1939 is the set of standards that defines communication between ECUs in trucks and buses, but it is used for a number of commercial vehicles like: Ambulances, Fire trucks, Construction equipment, Tractors, Harvesters, Tanks and transport vehicles. J1939 DTCs are based on four fields relaying data in a DTC fault. These four fields include: Suspect Parameter Number (SPN): A suspect parameter number is a 19-bit number with a range from 0 to 524287. The SPN is used in diagnostics to specify the particular DTC. Failure Mode Identifier (FMI): Used along with SPNs, FMIs provide specific information relating to DTCs. An FMI can indicate a problem with an electronic circuit or component. It may also indicate when an abnormal operating condition has been detected. Occurrence Counter (OC): This counter calculates the number of occurrences related to each SPN and stores this information when the error is no longer active, and SPN Conversion Method (CM): This defines the byte alignment of the DTC.

Analysis of DTC information from one or more vehicles over a time period can enable discovery of DTC patterns. These patterns can be used for in-route malfunction predictions. A DTC rulebook generation system (referred herein also as: "the system") can identify these DTC patterns using one or more machine learning models to generate DTC rules. The DTC rules can be arranged in DTC rulebooks comprising one or more DTC rules. These DTC rulebooks can differ in a level of precision the DTC rules comprised within adhere to. For example: A conservative DTC rulebook can require that the DTC rules comprised within have a precision that is above a high precision threshold (for example: the high precision threshold is 95% precision or higher). A relaxed DTC rulebook can require that the DTC rules comprised within have a precision that is above a low precision threshold (for example: the low precision threshold is 75% precision or higher). A balanced DTC rulebook can require that the DTC rules comprised within have a precision that is above a balanced precision threshold (for example: the balanced precision threshold is 85% of higher).

The DTC rulebook generation system can be used as part of a predictive VHM solution that can discover DTC patterns within telemetric data of a given vehicle for early detection of malfunctions. The DTC patterns are used to generate DTC rules gathered within DTC rulebooks. The DTC rulebooks will be used by technicians for diagnostics and preventative actions. The DTC rulebook generation system is capable of machine learning-based discovery of DTC patterns for early detection (for example: at least one day ahead) of malfunctions. The derived patterns are combined into a set of rules, namely DTC rulebooks, that will be used by technicians for diagnostics and preventative actions. Therefore, the discovered DTC patterns are specified in a human readable format offering the possibility for a manual and/or semi-manual pattern matching and evaluation (e.g., scoring cards or fault identification flowcharts).

The DTC rulebook generation system can utilize a three steps methodology for data analysis and rulebook generation. First, one or more machine learning models are trained with big data (for example: using AWS Databricks) for solving well-defined proxy machine learning tasks. These proxy tasks can include a classification task for classifying vehicles and rides (e.g., using tree ensembles), topic modeling task (e.g., using Latent Dirichlet Allocation (LDA)) for identifying underlying composite DTC sources, and a sequence mining task (e.g., using PrefixScan) for finding frequent subsequences of DTCs. At the second step, the resulting trained models are used for extracting individual high-quality candidate patterns (rules). The extracted rules are encoded using one of the supported human-readable formats: a scorecard template (assigns points to individual features and sets a threshold), a flowchart rule (if-then-else statements with the associated decision confidence) or as a temporal pattern (a subsequence). A hybrid rule format (as produced by LDA topic extraction) might combine several "pure" representations above. Finally, during the third step, the candidate rules are selected and aggregated into DTC rulebooks according to a given optimization criterion (e.g., maximizing coverage or maximizing precision).

The DTC rulebook generation system utilizes one or more telematics trace data records obtained from one or more vehicles over a time period and on one or more malfunction occurrence data records obtained from the vehicles over at least part of the time period. The telematics trace data records and the malfunction occurrence data records can be pre-processed into clean DTC state change data records by removing duplicates and, optionally, splitting rows based on the OC field. Additionally, the trace data records immediately preceding a malfunction event and/or a repair event (for example: one day and/or every 300km) are discarded to ensure a long enough prediction horizon. The clean DTC state change data records represent rides, wherein a ride is a segment between malfunction event and/or a repair event dates (or the beginning/end of the record). In some cases, the pre-processing includes discarding data directly before a malfunction event and/or a repair event to avoid short notice predictions. The rides are labeled by the DTC rulebook generation system as healthy (no malfunction event and/or a repair event occurred in that ride) or faulty (the ride occurred before or between malfunction events and/or a repair events). The DTC rulebook generation system can extract one or more features form the rides dataset, thereby converting the messages into feature vectors. Non-limiting examples of these features include one or more of: Number of occurrences of a DTC, Time between DTCs, Total active time, etc. The resulting rides dataset contains healthy and faulty rides based on the obtained records. The DTC rulebook generation system can utilize one or more machine learning models. The machine learning models can be trained on one or more subsets of the prepared ride dataset. At least one trained machine learning model of the machine learning models can be utilized to determine a DTC rule. One or more DTC rules can be aggregated into one or more DTC rulebooks. The machine learning models can include for a non-limiting example: Gradient Boosting Trees, Logistic Regression, Decision Tree, LDA topic modeling, Density-Based Spatial Clustering of Applications with Noise (DBSCAN) and PrefixScan. The models can be trained in a distributed manner.

The generated DTC rules can be of one or more formats. For example, a DTC rule format can be a scorecard format, wherein a logistic regression machine learning model is utilized by the DTC rulebook generation system. Logistic regression is a supervised machine learning algorithm that accomplishes binary classification tasks by predicting the probability of an outcome, event, or observation. The model delivers a binary or dichotomous outcome limited to two possible outcomes. The logistic regression machine learning model can be trained, for example, on a "points" feature to extract the DTCs that occur and/or the duration of time that these DTCs occur before (for example: one day before) a fault transpires within a vehicle. A non-limiting example of textual representation of a given scorecard DTC rule generated from the given obtained data is depicted below:

| **Feature** | **Appearance of DTC4464/2** | **Appearance of DTC 4598/8** | **Duration of DTC 4597/8 >988s** | **Appearance of DTC 4535/1** | **Duration of DTC 3048/4 >1.5s** | **Appearance of DTC 3048/4** | **Fault Treshold** |
|---|---|---|---|---|---|---|---|
| Points | 64 | 55 | 31 | 31 | 28 | 25 | 100 |

Another DTC rule format can be a conditional format, wherein a decision tree machine learning model is trained on the obtained data. Fig. 1, explained below, depicts a schematic illustration of an exemplary conditional DTC rule. Another DTC rule format can be a sequence format, wherein a sequence machine learning model (for example: a PrefixScan algorithm) is trained on the obtained data to identify sequences that distinguish between faulty rides and all rides. These sequences of DTCs occur mostly in faulty rides and are highly discriminative between faulty rides and all other rides. Sequences that are non-discriminative are not good candidate to be sequence DTC rules. A non-limiting example of textual representation of a given sequence DTC rule generated from the given obtained data is depicted below:

| **DTC Sequence discovered** | **Indications** |
|---|---|
| {SPN: 4548, FMI: 4, SPN: 4597, FMI: 8} | Occurs mostly in faulty rides =>Highly Discriminative |
| {SPN: 6183, FMI: 8, SPN: 6036, FMI: 4} | Occurs in both types of rides=>Non-Discriminative |

Another non-limiting examples of textual representations of some of the generated DTC rules from given obtained data are depicted below:

| **Rule Identifier** | **Rule/Pattern** | **Support** | **Hits (Precision)** |
|---|---|---|---|
| R1 | **IF** SPN=4547/FMI=1 | 33 (285) | 31 (**94%**) |
| R2 | **IF** SPN=3048/FMI=4, >**1.5 sec** | 88 (285) | 77 (**88%**) |
| R3 | **Sequence** [4548/4, 4597/8] | 67 (285) | 53 (**79%**) |

A non-limiting example of textual representation of some of the generated DTC rulebooks are depicted below:

| **Rulebook** | **Rules** | **Support (Faults)** | **Hits (Precision)** |
|---|---|---|---|
| Conservative | 3 | 83 (285) | 80 (**96%**) |
| Balanced | 3 | 148 (285) | 134 (**91%**) |
| Relaxed | 13 | 291 (285) | 222 (**76%**) |

A non-limiting example of textual representation of some of the DTC rules for a given DTC rulebook are depicted below:

| **Rule Identifier** | **Rule/Pattern** | **Support (Faults)** | **Hits (Precision)** |
|---|---|---|---|
| C1 | **IF** SPN=4598/FMI=8 | 41 (285) | 40 (**98%**) |
| C2 | **IF** SPN=4591/FMI=1 | 7 (285) | 7 (**100%**) |
| C3 | **IF** SPN=4464/FMI=2 | 36 (285) | 34 (**94%**) |

Bearing this in mind, attention is drawn to **Fig. 1****,** showing is a schematic illustration of an exemplary conditional DTC rule, in accordance with the presently disclosed subject matter.

A conditional DTC rule is associated with a decision tree machine learning model. A decision tree is a non-parametric supervised learning algorithm, which can be utilized for both classification and regression tasks. It has a hierarchical, tree structure, which consists of a root node, branches, internal nodes and leaf nodes. The decision tree utilizes a decision support hierarchical model that uses the tree-like structure as a model of decisions and their possible consequences, including chance event outcomes, resource costs, and utility. It is one way to display an algorithm that only contains conditional control statements. The conditional DTC rule is associated with a decision tree machine learning model that has been trained by the DTC rulebook generation system on the rides dataset and/or on one or more subsets of the rides dataset.

As shown in the schematic illustration, a conditional DTC rule can comprise one or more conditional nodes (e.g., conditional node A 110-a, conditional node B 110-b, conditional node C 110-c, ..., conditional node N 110-n). Each conditional node is associated with a condition. For example: the rule can be that a given DTC has occurred in a given ride dataset of a given vehicle. In a non-limiting example, the condition can be that the given DTC, having an SPN of: "3048" and an FMI of: "4" has occurred in the given ride dataset of the given vehicle. According to the invention, the condition also includes that the given DTC has occurred for a timespan that is above a timespan threshold. Continuing the above non-limiting example, the condition can be the given DTC, having an SPN of: "3048" and an FMI of: "4" has occurred for at least 1.5 seconds within the given ride dataset. The conditional DTC rule has a root conditional node, which is the fist condition in the conditional DTC rule. For example: conditional node A 110-a is the root conditional node of the exemplary conditional DTC rule illustrated in Fig. 1. In some cases, the DTC rulebook generation system trains the decision tree machine learning model in such a way that one conditional node (e.g., conditional node A 110-a, conditional node B 110-b, conditional node C 110-c, ..., conditional node N 110-n) is generated at each level of the decision tree. Each conditional node is associated with a condition that occur in a given ride data or does not occur in that given ride data. In some cases, the condition can include additional sub-conditions, such as the above exampled timespan condition. The conditional DTC rule continues to the next level of the decision tree in accordance with the result of the condition. If the condition is met - the conditional DTC rule results in a fault state 120 which indicated that the vehicle associated with the ride is predicted to encounter a malfunction within a timespan from the conditional DTC rule being met (for example: within a day of the conditional DTC rule being met). If the condition is not met - the conditional DTC rule continues with the conditional node on the next level of the decision tree. Continuing our non-limiting example above the next level of the exemplary conditional DTC rule is conditional node B 110-b. Conditional node B 110-b can be associated for example with a second condition which is if a second given DTC is present within the given ride dataset. Continuing the above non-limiting example, the second condition can be that the second given DTC, having an SPN of: "4598" and an FMI of: "8" has occurred within the given ride dataset. The decision tree can have at least one level - called the root conditional node. The decision tree can have many levels of conditional nodes, denoted here by the variable N (for example: the last level of the exemplary conditional DTC rule illustrated in Fig. 1 is conditional node N 110-n). If the condition of the last level of the decision tree is not met - than the conditional DTC rule results in a normal state 130 which indicated that the vehicle associated with the ride is not predicted to encounter a malfunction within a timespan from the conditional DTC rule being met (for example: within a day of the conditional DTC rule not being met). Continuing the above non-limiting example, a last level conditional node of the decision tree (for example: conditional node N 110-n) can be associated with a third condition. The third condition can be for example that a third DTC is present within the given ride dataset. This third condition can be: has a third given DTC, having an SPN of: "4464" and an FMI of: "2" has occurred within the given ride dataset. In our non-limiting example, if all of the conditions associated with the conditional nodes (e.g., conditional node A 110-a, conditional node B 110-b, conditional node C 110-c, ..., conditional node N 110-n) of the decision tree associated with the exemplary conditional DTC rule were not met for the given ride data of the given vehicle - than the exemplary conditional DTC rule is not met which indicates that the given vehicle associated with the given ride dataset is not predicted to encounter a malfunction within a timespan from the conditional DTC rule being met (for example: within a day of the conditional DTC rule not being met). On the other hand, if one or more of the conditions associated with the conditional nodes (e.g., conditional node A 110-a, conditional node B 110-b, conditional node C 110-c, ..., conditional node N 110-n) of the decision tree associated with the exemplary conditional DTC rule have been met for the given ride data of the given vehicle - than the exemplary conditional DTC rule is met which indicates that the vehicle associated with the ride is predicted to encounter a malfunction within a timespan from the conditional DTC rule being met (for example: within a day of the conditional DTC rule being met).

It is to be noted that each DTC rule can be associated with a DTC rule precision. The DTC rule precision is indicative of a percentage of hits the machine learning model had during training. Continuing the above non-limiting example, the decision tree machine learning model associated with the exemplary conditional DTC rule can have a precision of 94% based on the ride training dataset it was trained on by the DTC rulebook generation system. The precision is indicative of a percentage of hits the machine learning model had during training, for example the DTC rule precision in this non-limiting example is indicative of the number of hits (positive identifications) the machine learning model had during training divided by the number of overall predictions made by the decision tree machine learning model during training on the ride training dataset. The DTC rule can be also associated with recall and support information.

Based on the determined one or more DTC rules, the DTC rulebook generation system can assemble one or more DTC rules into one or more DTC rulebooks. At least one DTC rulebook of the DTC rulebooks comprises of one or more of the DTC rules having a DTC rule precision above a precision threshold. For example: A conservative DTC rulebook can require that the DTC rules comprised within have a precision that is above a high precision threshold (for example: the high precision threshold is 95% precision or higher). A relaxed DTC rulebook can require that the DTC rules comprised within have a precision that is above a low precision threshold (for example: the low precision threshold is 75% precision or higher). A balanced DTC rulebook can require that the DTC rules comprised within have a precision that is above a balanced precision threshold (for example: the balanced precision threshold is 85% of higher). The DTC rulebooks can be in some cases non-exclusive, where one DTC rule can be associated with more than one DTC rulebook.

After describing the exemplary conditional DTC rule, attention is now drawn to a description of the components of a DTC rulebook generation system in Fig. 2.

**Fig. 2** is a block diagram schematically illustrating one example of a DTC rulebook generation system, in accordance with the presently disclosed subject matter.

In accordance with the presently disclosed subject matter, the DTC rulebook generation system 200 (also referred herein as: "system 200") can comprise a network interface 220. The network interface 220 (e.g., a network card, a Wi-Fi client, a Li-Fi client, 3G/4G/5G client, satellite communications or any other component), enables matching system 200 to communicate over a network with external systems and handles inbound and outbound communications from such systems. For example, DTC rulebook generation system 200 can receive and/or send, through network interface 220, one or more telematics trace data records, one or more malfunction occurrence data records, one or more machine learning models, training data-sets used to train the machine learning models, DTC rules, DTC rulebooks, etc.

System 200 can further comprise or be otherwise associated with a data repository 210 (e.g., a database, a storage system, a memory including Read Only Memory - ROM, Random Access Memory - RAM, or any other type of memory, etc.) configured to store data. Some examples of data that can be stored in the data repository 210 include: one or more telematics trace data records, one or more malfunction occurrence data records, one or more machine learning models, training data-sets used to train the machine learning models, DTC rules, DTC rulebooks, etc. Data repository 210 can be further configured to enable retrieval and/or update and/or deletion of the stored data. It is to be noted that in some cases, data repository 210 can be distributed, while matching system 200 has access to the information stored thereon, e.g., via a wired or wireless network to which matching system 200 is able to connect (utilizing its network interface 220).

DTC rulebook generation system 200 further comprises processing circuitry 230. Processing circuitry 230 can be one or more processing units (e.g., central processing units), microprocessors, microcontrollers (e.g., microcontroller units (MCUs) cloud servers, graphical processing units (GPUs), or any other computing devices or modules, including multiple and/or parallel and/or distributed processing units, which are adapted to independently or cooperatively process data for controlling relevant DTC rulebook generation system 200 resources and for enabling operations related to DTC rulebook generation system's 200 resources.

The processing circuitry 230 comprises a DTC rulebook generation module 240, configured to perform a DTC rulebook generation process, as further detailed herein, inter alia with reference to Fig. 3.

It should be noted that DTC rulebook generation system 200 can operate as a standalone system without the need for network interface 220 and/or data repository 210. Adding one or both of these elements to matching system 200 is optional and not mandatory, as DTC rulebook generation system 200 can operate according to its intended use either way.

Having described the block diagrams of DTC rulebook generation system 200, attention is now drawn to **Fig. 3** showing a flowchart illustrating an example of a sequence of operations carried out for performing a DTC rulebook generation process, in accordance with the presently disclosed subject matter.

Accordingly, the DTC rulebook generation system 200 can be configured to perform a DTC rulebook generation process 300, e.g., using the DTC rulebook generation module 240.

The DTC rulebook generation system 200 can utilize one or more telematics trace data records obtained from one or more vehicles over a time period and on one or more malfunction occurrence data records obtained from the vehicles over at least part of the time period. The telematics trace data records and the malfunction occurrence data records can be pre-processed into clean DTC state change data records by removing duplicates and, optionally, splitting rows based on the OC field. Additionally, the trace data records immediately preceding a malfunction event and/or a repair event (one day and/or every 300km) are discarded to ensure a long enough prediction horizon. The clean DTC state change data records represent rides, wherein a ride is a segment between malfunction event and/or a repair event dates (or the beginning/end of the record). In some cases, the pre-processing includes discarding data directly before a malfunction event and/or a repair event to avoid short notice predictions. The rides are labeled by the DTC rulebook generation system 200 as healthy (no malfunction event and/or a repair event occurred in that ride) or faulty (the ride occurred before or between malfunction events and/or a repair events). The DTC rulebook generation system 200 can extract one or more features form the rides dataset, thereby converting the messages into feature vectors. Non-limiting examples of these features include one or more of: Number of occurrences of a DTC, Time between DTCs, Total active time, etc. The resulting rides dataset contains healthy and faulty rides based on the obtained records. The DTC rulebook generation system 200 can utilize one or more machine learning models. The machine learning models can be trained on one or more subsets of the prepared ride dataset. At least one trained machine learning model of the machine learning models can be utilized to determine a DTC rule. One or more DTC rules can be aggregated into one or more DTC rulebooks. In some cases, the aggregation into DTC rulebooks is based on the DTC rule precision.

For this purpose, DTC rulebook generation system 200 obtains: (A) one or more telematics trace data records obtained from one or more vehicles over a time period, wherein at least one telematics trace data record of the telematics trace data records comprises of: a vehicle ID indicative of the ID of a vehicle of the vehicles from which the telematics trace data record is obtained, a given DTC, a first timestamp indicative of when the given DTC occurred, and a timespan indicative of how long the given DTC is active, and (B) one or more malfunction occurrence data records obtained from the vehicles over at least part of the time period, wherein at least one malfunction occurrence data record of the malfunction occurrence data records comprises of: a vehicle ID indicative of the ID of a vehicle of the vehicles where a given malfunction occurred, a second timestamp indicative of when the given malfunction occurred, and a malfunction code indicative of a type of the given malfunction (block 310). It is to be noted that a malfunction can be a fault event where a given fault occurred in the vehicle or a repair event where the vehicle had to go through a repair. In some cases, the repair can be a planned maintenance repair or an un-planned repair. A non-limiting example of obtained telematics trace data records for a given vehicle over a time period can be multiple telematics records, each is associated with an occurrence of a given DTC at the given vehicle. A non-limiting of obtained malfunction occurrence data records for the given vehicle over the time period can be for two malfunctions that occurred in the vehicle during the time period - a first malfunction occurrence data record and a second malfunction occurrence data record.

Once the telematics trace data records and the malfunction occurrence data records are obtained, DTC rulebook generation system 200 can be configured to extract one or more ride records from the obtained telematics trace data records and the obtained malfunction occurrence data records, wherein at least one ride record of the ride records is for a given vehicle, and wherein: (i) in case there are no malfunction occurrence data records associated with the given vehicle, the ride record comprises of all the telematics trace data records associated with the given vehicle, (ii) in case there is one malfunction occurrence data record associated with the given vehicle, the ride record comprises of the telematics trace data records associated with the given vehicle that occurred before the second timestamp of the one malfunction occurrence data record, and (iii) in case there are two or more malfunction occurrence data records associated with the given vehicle, the ride record comprises of the telematics trace data records of associated with the given vehicle that occurred between the second timestamps of the two or more malfunction occurrence data records (block 320). Continuing the above non-limiting example, DTC rulebook generation system 200 will extract three ride records: a first ride record comprising the obtained telematics trace data records that occurred between a timestamp of the first malfunction occurrence data record and a timestamp of the second malfunction occurrence data record, a second ride record comprising the obtained telematics trace data records that occurred before the timestamp of the first malfunction occurrence data record, and a third ride record comprising the obtained telematics trace data records that occurred after the timestamp of the second malfunction occurrence data record.

It is to be noted that in some cases, at least one ride record of the ride records comprises telematics trace data records having timespan that is above a timespan threshold. A non-limiting example of the timespan threshold can be 1.5 seconds. In these cases, occurrences of DTC for less than the timespan threshold will not be included in the ride record.

After the extraction of the one or more ride records, DTC rulebook generation system 200 can be further configured to label at least one ride record of the ride records as a healthy ride or a faulty ride, wherein a ride record associated with a given vehicle where no malfunction occurrence data records are associated with the given vehicle is labeled as a healthy ride, otherwise the ride record is labeled as a faulty ride (block 330). Continuing the above non-limiting example, DTC rulebook generation system 200 will label the above exemplary three ride records as following: the first ride record comprising the obtained telematics trace data records that occurred between a timestamp of the first malfunction occurrence data record and a timestamp of the second malfunction occurrence data record will be labeled as faulty ride because it ended with the occurrence of the second malfunction occurrence data record. The second ride record comprising the obtained telematics trace data records that occurred before the timestamp of the first malfunction occurrence data record will be labeled as faulty ride because it ended with the occurrence of the first malfunction occurrence data record. The third ride record comprising the obtained telematics trace data records that occurred after the timestamp of the second malfunction occurrence data record will be labeled as healthy because it does not comprise the occurrence of a malfunction occurrence data record as at the time period of the third ride record no malfunction occurred in that vehicle.

Once the ride records are labeled, DTC rulebook generation system 200 can be further configured to train one or more machine learning models on one or more subsets of the labeled ride records (block 340). In some cases, the machine learning models are one or more of: a logistic regression model, a decision tree model, sequencing model, neural network model, a gradient boosting tree model, or any other machine learning model. Continuing the above non-limiting example, a decision tree model and/or a decision tree machine learning model can be trained on the labeled ride records.

It is to be noted that the training can be done on one or more subsets of the labeled ride records are one or more of: subsets of data of the labeled ride records, or subsets of features of the labeled ride records. The training can be done by DTC rulebook generation system 200 for multiple time utilizing the same of different subset of the labeled ride records. Each training can be done for one or more machine learning models.

DTC rulebook generation system 200 can be further configured to determine one or more DTC rules utilizing at least one of the trained machine learning models, wherein at least one DTC rule of the DTC rules is associated with a given machine learning model and a DTC rule precision indicative of a percentage of hits the machine learning model had during training (block 350).

In some cases, the machine learning models is a logistic regression model and wherein at least one of the DTC rules is a scorecard comprising: one or more DTC associated with the ride records used to train the logistic regression model.

In some other cases, at least one of the machine learning models is a decision tree model and wherein at least one of the DTC rules is a conditional rule associated with the decision tree model.

In other cases, the machine learning models is a sequencing model and wherein at least one of the DTC rules is a sequence rule associated with a sequence of DTC identified by the sequencing model to occur in ride records that are labeled as faulty rides and not occur in ride records that are labeled as healthy rides.

Continuing the above non-limiting example, the machine learning model is a decision tree model and the exemplary decision tree machine learning model depicted in Fig. 1 has been trained by DTC rulebook generation system 200 on a subset of the labeled ride records. In this non-limiting example, the determined DTC rule is the conditional rule associated with the decision tree model as described in the example above.

After determining one or more DTC rules, DTC rulebook generation system 200 can be further configured to generate at least one DTC rulebook, wherein a DTC rulebook comprises of one or more of the DTC rules having a DTC rule precision above a precision threshold (block 360). It is to be noted that in some cases, the generation of the at least one DTC rulebook is assisted by user feedback given by a user of the DTC rulebook generation system. For example, a user can indicate to DTC rulebook generation system 200 that a certain DTC rule should be excluded from all DTC rulebooks and the DTC rulebook generation system 200 will remove that certain DTC rule from all DTC rulebooks. In other cases, The DTC rulebooks can differ in a level of precision the DTC rules comprised within adhere to. For example: A conservative DTC rulebook can require that the DTC rules comprised within have a precision that is above a high precision threshold (for example: the high precision threshold is 95% precision or higher). A relaxed DTC rulebook can require that the DTC rules comprised within have a precision that is above a low precision threshold (for example: the low precision threshold is 75% precision or higher). A balanced DTC rulebook can require that the DTC rules comprised within have a precision that is above a balanced precision threshold (for example: the balanced precision threshold is 85% of higher). In these cases, the user feedback can be to move a certain DTC rule from a first DTC rulebook to a second DTC rulebook in accordance with the moderation level of that certain DTC rule and its compatibility with the moderation level of the first and second DTC rulebooks.

In some cases, the user feedback can be utilized for an active learning procedure. In an active learning procedure, the labeled ride records are updated in accordance with the user feedback. For example, the user can change the label of a given ride record from faulty to healthy due to his knowledge of that given ride record.

It is to be noted, with reference to **Fig. 3****,** that some of the blocks can be integrated into a consolidated block or can be broken down to a few blocks and/or other blocks may be added. It is to be further noted that some of the blocks are optional. It should be also noted that whilst the flow diagram is described also with reference to the system elements that realizes them, this is by no means binding, and the blocks can be performed by elements other than those described herein.

It will also be understood that the system according to the presently disclosed subject matter can be implemented, at least partly, as a suitably programmed computer. Likewise, the presently disclosed subject matter contemplates a computer program being readable by a computer for executing the disclosed method. The presently disclosed subject matter further contemplates a machine-readable memory tangibly embodying a program of instructions executable by the machine for executing the disclosed method.

## Claims

1. A Diagnostic Trouble Code (DTC) rulebook generation system (200), the DTC rulebook generation system (200) comprising a processing circuitry (230) configured to:
obtain:
(A) one or more telematics trace data records obtained from one or more vehicles over a time period, wherein at least one of the one or more telematics trace data records comprises of: a vehicle ID indicative of the ID of a vehicle of the one or more vehicles from which the at least one telematics trace data record is obtained, a given DTC, a first timestamp indicative of when the given DTC occurred, and a timespan indicative of how long the given DTC is active, and
(B) one or more malfunction occurrence data records obtained from the one or more vehicles over at least part of the time period, wherein at least one of the one or more malfunction occurrence data records comprises of: a vehicle ID indicative of the ID of a vehicle of the one or more vehicles where a given malfunction occurred,
a second timestamp indicative of when the given malfunction occurred, and a malfunction code indicative of a type of the given malfunction; and extract one or more ride records from the obtained one or more telematics trace data records and the obtained one or more malfunction occurrence data records, wherein at least one of the one or more ride records is for a given vehicle of the one or more vehicles, and wherein: (i) in case there are no malfunction occurrence data records associated with the given vehicle, the ride record comprises of all the telematics trace data records associated with the given vehicle, (ii) in case there is one malfunction occurrence data record associated with the given vehicle, the ride record comprises of the telematics trace data records associated with the given vehicle that occurred before the second timestamp of the one malfunction occurrence data record, and (iii) in case there are two or more malfunction occurrence data records associated with the given vehicle, the ride record comprises of the telematics trace data records associated with the given vehicle that occurred between the second timestamps of the two or more malfunction occurrence data records;
label at least one of the one or more ride records as a healthy ride or a faulty ride, wherein a ride record associated with a given vehicle where no malfunction occurrence data records are associated with the given vehicle is labeled as a healthy ride, otherwise the ride record is labeled as a faulty ride;
train one or more machine learning models on one or more subsets of the labeled ride records;
determine one or more DTC rules utilizing at least one of the trained machine learning models, wherein: (i) at least one of the machine learning models is a decision tree model, (ii) at least one of the one or more DTC rules is a conditional rule associated with the decision tree model, (iii) the conditional rule includes at least one sub-condition, which is that the given DTC has occurred for a timespan that is above a timespan threshold, and (iv) the at least one of the one or more DTC rules is associated with a given machine learning model and a DTC rule precision indicative of a percentage of hits the machine learning model had during training; and
generate at least one DTC rulebook, wherein the at least one DTC rulebook comprises of one or more of the DTC rules having a DTC rule precision above a precision threshold, wherein the DTC rules of the generated at least one DTC rulebook are specified in a human-readable format to enable manual or semi-manual pattern matching and evaluation by technicians.

2. The DTC rulebook generation system (200) of claim 1, wherein at least one of the machine learning models are one or more of: a logistic regression model, sequencing model, neural network model, or a gradient boosting tree model.

3. The DTC rulebook generation system (200) of claim 2, wherein at least one of the machine learning models is a logistic regression model and wherein at least one of the DTC rules is a scorecard comprising: one or more DTC associated with the ride records used to train the logistic regression model.

4. The DTC rulebook generation system (200) of any of claims 2-3, wherein at least one of the machine learning models is a sequencing model and wherein at least one of the DTC rules is a sequence rule associated with a sequence of DTC identified by the sequencing model to occur in ride records that are labeled as faulty rides and not occur in ride records that are labeled as healthy rides.

5. The DTC rulebook generation system (200) of any of the previous claims, wherein one or more subsets of the labeled ride records are one or more of: subsets of data of the labeled ride records, or subsets of features of the labeled ride records.

6. The DTC rulebook generation system (200) of any of the previous claims, wherein the generation of the at least one DTC rulebook is assisted by user feedback given by a user of the DTC rulebook generation system (200).

7. A Diagnostic Trouble Code (DTC) rulebook generation method, the DTC rulebook generation method comprising:
obtaining, by a processing circuitry:
(A) one or more telematics trace data records obtained from one or more vehicles over a time period, wherein at least one of the one or more telematics trace data records comprises of: a vehicle ID indicative of the ID of a vehicle of the one or more 5 vehicles from which the at least one telematics trace data record is obtained, a given DTC, a first timestamp indicative of when the given DTC occurred, and a timespan indicative of how long the given DTC is active, and
(B) one or more malfunction occurrence data records obtained from the one or more vehicles over at least part of the time period, wherein at least one of the one or more malfunction occurrence data records comprises of: a vehicle ID indicative of the ID of a vehicle of the one or more vehicles where a given malfunction occurred,
a second timestamp indicative of when the given malfunction occurred, and a malfunction code indicative of a type of the given malfunction; and
extracting, by the processing circuitry, one or more ride records from the obtained one or more telematics trace data records and the obtained one or more malfunction occurrence data records,
wherein at least one of the one or more ride records is for a given vehicle of the one or more vehicles, and wherein:
(i) in case there are no malfunction occurrence data records associated with the given vehicle, the ride record comprises of all the telematics trace data records associated with the given vehicle, (ii) in case there is one malfunction occurrence data record associated with the given vehicle, the ride record comprises of the telematics trace data records associated with the given vehicle that occurred before the second timestamp of the one malfunction occurrence data record, and (iii) in case there are two or more malfunction occurrence data records associated with the given vehicle, the ride record comprises of the telematics trace data records associated with the given vehicle that occurred between the second timestamps of the two or more malfunction occurrence data records;
labeling, by the processing circuitry, at least one of the one or more ride records as a healthy ride or a faulty ride, wherein a ride record associated with a given vehicle where no malfunction occurrence data records are associated with the given vehicle is labeled as a healthy ride, otherwise the ride record is labeled as a faulty ride;
training, by the processing circuitry, one or more machine learning models on one or more subsets of the labeled ride records;
determining, by the processing circuitry, one or more DTC rules utilizing at least one of the trained machine learning models, wherein: (i) at least one of the machine learning models is a decision tree model, (ii) at least one of the one or more DTC rules is a conditional rule associated with the decision tree model, (iii) the conditional rule includes at least one sub-condition, which is that the given DTC has occurred for a timespan that is above a timespan threshold, and (iv) the at least one of the one or more DTC rules is associated with a given machine learning model and a DTC rule precision indicative of a percentage of hits the machine learning model had during training; and
generating, by the processing circuitry, at least one DTC rulebook, wherein the at least one DTC rulebook comprises of one or more of the DTC rules having a DTC rule precision above a precision threshold, wherein the DTC rules of the generated at least one DTC rulebook are specified in a human-readable format to enable manual or semi-manual pattern matching and evaluation by technicians.

8. The DTC rulebook generation method of claim 7, wherein at least one of the machine learning models are one or more of: a logistic regression model, sequencing model, neural network model, or a gradient boosting tree model.

9. The DTC rulebook generation method of claim 8, wherein at least one of the machine learning models is a logistic regression model and wherein at least one of the DTC rules is a scorecard comprising: one or more DTC associated with the ride records used to train the logistic regression model.

10. The DTC rulebook generation method of any of claims 8-9, wherein at least one of the machine learning models is a sequencing model and wherein at least one of the DTC rules is a sequence rule associated with a sequence of DTC identified by the sequencing model to occur in ride records that are labeled as faulty rides and not occur in ride records that are labeled as healthy rides.

11. The DTC rulebook generation method of any of claims 7-10, wherein one or more subsets of the labeled ride records are one or more of: subsets of data of the labeled ride records, or subsets of features of the labeled ride records.

12. The DTC rulebook generation method of any of claims 7-11, wherein the generation of the at least one DTC rulebook is assisted by user feedback given by a user of the DTC rulebook generation system.

13. A non-transitory computer readable storage medium having computer readable program code embodied therewith, the computer readable program code, executable by processing circuitry of a computer to perform a Diagnostic Trouble Code (DTC) rulebook generation method, the DTC rulebook generation method comprising:
obtaining, by a processing circuitry:
(A) one or more telematics trace data records obtained from one or more vehicles over a time period, wherein at least one of the one or more telematics trace data records comprises of: a vehicle ID indicative of the ID of a vehicle of the one or more vehicles from which the at least one telematics trace data record is obtained, a given DTC, a first timestamp indicative of when the given DTC occurred, and a timespan indicative of how long the given DTC is active, and
(B) one or more malfunction occurrence data records obtained from the one or more vehicles over at least part of the time period, wherein at least one of the one or more malfunction occurrence data records comprises of: a vehicle ID indicative of the ID of a vehicle of the one or more vehicles where a given malfunction occurred, a second timestamp indicative of when the given malfunction occurred, and a malfunction code indicative of a type of the given malfunction; and
extracting, by the processing circuitry, one or more ride records from the obtained one or more telematics trace data records and the obtained one or more malfunction occurrence data records, wherein at least of the one or more ride records is for a given vehicle of the one or more vehicles, and wherein:
(i) in case there are no malfunction occurrence data records associated with the given vehicle, the ride record comprises of all the telematics trace data records associated with the given vehicle, (ii) in case there is one malfunction occurrence data record associated with the given vehicle, the ride record comprises of the telematics trace data records associated with the given vehicle that occurred before the second timestamp of the one malfunction occurrence data record, and (iii) in case there are two or more malfunction occurrence data records associated with the given vehicle, the ride record comprises of the telematics trace data records associated with the given vehicle that occurred between the second timestamps of the two or more malfunction occurrence data records;
labeling, by the processing circuitry, at least one of the one or more ride records as a healthy ride or a faulty ride, wherein a ride record associated with a given vehicle where no malfunction occurrence data records are associated with the given vehicle is labeled as a healthy ride, otherwise the ride record is labeled as a faulty ride;
training, by the processing circuitry, one or more machine learning models on one or more subsets of the labeled ride records;
determining, by the processing circuitry, one or more DTC rules utilizing at least one of the trained machine learning models, wherein: (i) at least one of the machine learning models is a decision tree model, (ii) at least one of the one or more DTC rules is a conditional rule associated with the decision tree model, (iii) the conditional rule includes at least one sub-condition, which is that the given DTC has occurred for a timespan that is above a timespan threshold, and (iv) the at least one of the one or more DTC rules is associated with a given machine learning model and a DTC rule precision indicative of a percentage of hits the machine learning model had during training; and
generating, by the processing circuitry, at least one DTC rulebook, wherein the at least one DTC rulebook comprises of one or more of the DTC rules having a DTC rule precision above a precision threshold, wherein the DTC rules of the generated at least one DTC rulebook are specified in a human-readable format to enable manual or semi-manual pattern matching and evaluation by technicians.

## Patentansprüche

1. Ein System (200) zur Erzeugung eines Regelbuchs für Diagnosefehlercodes (DTC), wobei das System (200) zur Erzeugung eines DTC-Regelbuchs eine Verarbeitungsschaltung (230) umfasst, die dazu konfiguriert ist:
zu erhalten:
(A) einen oder mehrere Telematik-Trace-Datensätze, die über einen Zeitraum von einem oder mehreren Fahrzeugen erhalten wurden, wobei wenigstens einer der einen oder mehreren Telematik-Trace-Datensätze Folgendes umfasst: eine Fahrzeug-ID, die die ID eines Fahrzeugs der einen oder mehreren Fahrzeuge angibt, von dem der wenigstens eine Telematik-Trace-Datensatz erhalten wird, einen gegebenen DTC, einen ersten Zeitstempel, der angibt, wann der gegebene DTC aufgetreten ist, und eine Zeitspanne, die angibt, wie lange der gegebene DTC aktiv ist, und
(B) einen oder mehrere Störungsereignis-Datensätze, die von den einen oder mehreren Fahrzeugen über zumindest einen Teil des Zeitraums erhalten wurden, wobei wenigstens einer der einen oder mehreren Störungsereignis-Datensätze Folgendes umfasst: eine Fahrzeug-ID, die die ID eines Fahrzeugs der einen oder mehreren Fahrzeuge angibt, bei dem eine gegebene Störung aufgetreten ist, einen zweiten Zeitstempel, der angibt, wann die gegebene Störung aufgetreten ist, und einen Störungscode, der eine Art der gegebenen Störung angibt; und
einen oder mehrere Fahrtdatensätze aus den erhaltenen einen oder mehreren Telematik-Trace-Datensätzen und den erhaltenen einen oder mehreren Störungsereignis-Datensätzen zu extrahieren, wobei wenigstens einer der einen oder mehreren Fahrtdatensätze für ein gegebenes Fahrzeug der einen oder mehreren Fahrzeuge ist,
und wobei: (i) für den Fall, dass dem gegebenen Fahrzeug keine Störungsereignis-Datensätze zugeordnet sind, der Fahrtdatensatz alle dem gegebenen Fahrzeug zugeordneten Telematik-Trace-Datensätze umfasst, (ii) für den Fall, dass dem gegebenen Fahrzeug ein Störungsereignis-Datensatz zugeordnet ist, der Fahrtdatensatz die dem gegebenen Fahrzeug zugeordneten Telematik-Trace-Datensätze umfasst, die vor dem zweiten Zeitstempel des einen Störungsereignis-Datensatzes aufgetreten sind, und (iii) für den Fall, dass dem gegebenen Fahrzeug zwei oder mehr Störungsereignis-Datensätze zugeordnet sind, der Fahrtdatensatz die dem gegebenen Fahrzeug zugeordneten Telematik-Trace-Datensätze umfasst, die zwischen den zweiten Zeitstempeln der zwei oder mehr Störungsereignis-Datensätze aufgetreten sind;
wenigstens einen der einen oder mehreren Fahrtdatensätze als gesunde Fahrt oder fehlerhafte Fahrt zu kennzeichnen, wobei ein Fahrtdatensatz, der einem gegebenen Fahrzeug zugeordnet ist, dem keine Störungsereignis-Datensätze zugeordnet sind, als gesunde Fahrt gekennzeichnet wird, andernfalls wird der Fahrtdatensatz als fehlerhafte Fahrt gekennzeichnet;
ein oder mehrere Modelle des maschinellen Lernens mit einem oder mehreren Teilmengen der gekennzeichneten Fahrtdatensätze zu trainieren;
eine oder mehrere DTC-Regeln unter Verwendung wenigstens eines der trainierten Modelle des maschinellen Lernens zu bestimmen, wobei: (i) wenigstens eines der Modelle des maschinellen Lernens ein Entscheidungsbaum-Modell ist, (ii) wenigstens eine der einen oder mehreren DTC-Regeln eine dem Entscheidungsbaum-Modell zugeordnete bedingte Regel ist, (iii) die bedingte Regel wenigstens eine Unterbedingung umfasst, nämlich dass der gegebene DTC für eine Zeitspanne aufgetreten ist, die über einem Zeitspannen-Schwellenwert liegt, und (iv) die wenigstens eine der einen oder mehreren DTC-Regeln einem gegebenen Modell des maschinellen Lernens und einer DTC-Regelpräzision zugeordnet ist, die einen Prozentsatz von Treffern angibt, die das Modell des maschinellen Lernens während des Trainings hatte; und
wenigstens ein DTC-Regelbuch zu erzeugen, wobei das wenigstens eine DTC-Regelbuch eine oder mehrere der DTC-Regeln umfasst, die eine DTC-Regelpräzision über einem Präzisionsschwellenwert aufweisen,
wobei die DTC-Regeln des erzeugten wenigstens einen DTC-Regelbuchs in einem menschenlesbaren Format angegeben sind, um einen manuellen oder halbmanuellen Musterabgleich und eine Bewertung durch Techniker zu ermöglichen.

2. Das System (200) zur Erzeugung eines DTC-Regelbuchs nach Anspruch 1, wobei wenigstens eines der Modelle des maschinellen Lernens eines oder mehrere der folgenden ist: ein logistisches Regressionsmodell, ein Sequenzierungsmodell, ein neuronales Netzwerkmodell oder ein Gradient-Boosting-Baum-Modell.

3. Das System (200) zur Erzeugung eines DTC-Regelbuchs nach Anspruch 2, wobei wenigstens eines der Modelle des maschinellen Lernens ein logistisches Regressionsmodell ist und wobei wenigstens eine der DTC-Regeln eine Scorecard ist, die Folgendes umfasst: einen oder mehrere DTC, die den Fahrtdatensätzen zugeordnet sind, die zum Trainieren des logistischen Regressionsmodells verwendet wurden.

4. Das System (200) zur Erzeugung eines DTC-Regelbuchs nach einem der Ansprüche 2-3, wobei wenigstens eines der Modelle des maschinellen Lernens ein Sequenzierungsmodell ist und wobei wenigstens eine der DTC-Regeln eine Sequenzregel ist, die einer Sequenz von DTC zugeordnet ist, die durch das Sequenzierungsmodell dahingehend identifiziert wurde, in Fahrtdatensätzen aufzutreten, die als fehlerhafte Fahrten gekennzeichnet sind, und nicht in Fahrtdatensätzen aufzutreten, die als gesunde Fahrten gekennzeichnet sind.

5. Das System (200) zur Erzeugung eines DTC-Regelbuchs nach einem der vorhergehenden Ansprüche, wobei die eine oder mehreren Teilmengen der gekennzeichneten Fahrtdatensätze eines oder mehrere der folgenden sind: Teilmengen von Daten der gekennzeichneten Fahrtdatensätze oder Teilmengen von Merkmalen der gekennzeichneten Fahrtdatensätze.

6. Das System (200) zur Erzeugung eines DTC-Regelbuchs nach einem der vorhergehenden Ansprüche, wobei die Erzeugung des wenigstens einen DTC-Regelbuchs durch Benutzer-Feedback unterstützt wird, das von einem Benutzer des Systems (200) zur Erzeugung eines DTC-Regelbuchs gegeben wird.

7. Ein Verfahren zur Erzeugung eines Regelbuchs für Diagnosefehlercodes (DTC), wobei das Verfahren zur Erzeugung eines DTC-Regelbuchs Folgendes umfasst:
Erhalten, durch eine Verarbeitungsschaltung:
(A) eines oder mehrerer Telematik-Trace-Datensätze, die über einen Zeitraum von einem oder mehreren Fahrzeugen erhalten wurden, wobei wenigstens einer der einen oder mehreren Telematik-Trace-Datensätze Folgendes umfasst: eine Fahrzeug-ID, die die ID eines Fahrzeugs der einen oder mehreren Fahrzeuge angibt, von dem der wenigstens eine Telematik-Trace-Datensatz erhalten wird, einen gegebenen DTC, einen ersten Zeitstempel, der angibt, wann der gegebene DTC aufgetreten ist, und eine Zeitspanne, die angibt, wie lange der gegebene DTC aktiv ist, und
(B) einen oder mehrere Störungsereignis-Datensätze, die von den einen oder mehreren Fahrzeugen über zumindest einen Teil des Zeitraums erhalten wurden, wobei wenigstens einer der einen oder mehreren Störungsereignis-Datensätze Folgendes umfasst: eine Fahrzeug-ID, die die ID eines Fahrzeugs der einen oder mehreren Fahrzeuge angibt, bei dem eine gegebene Störung aufgetreten ist, einen zweiten Zeitstempel, der angibt, wann die gegebene Störung aufgetreten ist, und einen Störungscode, der eine Art der gegebenen Störung angibt; und
Extrahieren, durch die Verarbeitungsschaltung, eines oder mehrerer Fahrtdatensätze aus den erhaltenen einen oder mehreren Telematik-Trace-Datensätzen und den erhaltenen einen oder mehreren Störungsereignis-Datensätzen,
wobei wenigstens einer der einen oder mehreren Fahrtdatensätze für ein gegebenes Fahrzeug der einen oder mehreren Fahrzeuge ist, und wobei:
(i) für den Fall, dass dem gegebenen Fahrzeug keine Störungsereignis-Datensätze zugeordnet sind, der Fahrtdatensatz alle dem gegebenen Fahrzeug zugeordneten Telematik-Trace-Datensätze umfasst, (ii) für den Fall, dass dem gegebenen Fahrzeug ein Störungsereignis-Datensatz zugeordnet ist, der Fahrtdatensatz die dem gegebenen Fahrzeug zugeordneten Telematik-Trace-Datensätze umfasst, die vor dem zweiten Zeitstempel des einen Störungsereignis-Datensatzes aufgetreten sind, und (iii) für den Fall, dass dem gegebenen Fahrzeug zwei oder mehr Störungsereignis-Datensätze zugeordnet sind, der Fahrtdatensatz die dem gegebenen Fahrzeug zugeordneten Telematik-Trace-Datensätze umfasst, die zwischen den zweiten Zeitstempeln der zwei oder mehr Störungsereignis-Datensätze aufgetreten sind;
Kennzeichnen, durch die Verarbeitungsschaltung, wenigstens eines der einen oder mehreren Fahrtdatensätze als gesunde Fahrt oder fehlerhafte Fahrt, wobei ein Fahrtdatensatz, der einem gegebenen Fahrzeug zugeordnet ist, dem keine Störungsereignis-Datensätze zugeordnet sind, als gesunde Fahrt gekennzeichnet wird, andernfalls wird der Fahrtdatensatz als fehlerhafte Fahrt gekennzeichnet;
Trainieren, durch die Verarbeitungsschaltung, eines oder mehrerer Modelle des maschinellen Lernens mit einem oder mehreren Teilmengen der gekennzeichneten Fahrtdatensätze;
Bestimmen, durch die Verarbeitungsschaltung, einer oder mehrerer DTC-Regeln unter Verwendung wenigstens eines der trainierten Modelle des maschinellen Lernens, wobei: (i) wenigstens eines der Modelle des maschinellen Lernens ein Entscheidungsbaum-Modell ist, (ii) wenigstens eine der einen oder mehreren DTC-Regeln eine dem Entscheidungsbaum-Modell zugeordnete bedingte Regel ist, (iii) die bedingte Regel wenigstens eine Unterbedingung umfasst, nämlich dass der gegebene DTC für eine Zeitspanne aufgetreten ist, die über einem Zeitspannen-Schwellenwert liegt, und (iv) die wenigstens eine der einen oder mehreren DTC-Regeln einem gegebenen Modell des maschinellen Lernens und einer DTC-Regelpräzision zugeordnet ist, die einen Prozentsatz von Treffern angibt, die das Modell des maschinellen Lernens während des Trainings hatte; und
Erzeugen, durch die Verarbeitungsschaltung, wenigstens eines DTC-Regelbuchs, wobei das wenigstens eine DTC-Regelbuch eine oder mehrere der DTC-Regeln umfasst, die eine DTC-Regelpräzision über einem Präzisionsschwellenwert aufweisen, wobei die DTC-Regeln des erzeugten wenigstens einen DTC-Regelbuchs in einem menschenlesbaren Format angegeben sind, um einen manuellen oder halbmanuellen Musterabgleich und eine Bewertung durch Techniker zu ermöglichen.

8. Das Verfahren zur Erzeugung eines DTC-Regelbuchs nach Anspruch 7, wobei wenigstens eines der Modelle des maschinellen Lernens eines oder mehrere der folgenden ist: ein logistisches Regressionsmodell, ein Sequenzierungsmodell, ein neuronales Netzwerkmodell oder ein Gradient-Boosting-Baum-Modell.

9. Das Verfahren zur Erzeugung eines DTC-Regelbuchs nach Anspruch 8, wobei wenigstens eines der Modelle des maschinellen Lernens ein logistisches Regressionsmodell ist und wobei wenigstens eine der DTC-Regeln eine Scorecard ist, die Folgendes umfasst: einen oder mehrere DTC, die den Fahrtdatensätzen zugeordnet sind, die zum Trainieren des logistischen Regressionsmodells verwendet wurden.

10. Das Verfahren zur Erzeugung eines DTC-Regelbuchs nach einem der Ansprüche 8-9, wobei wenigstens eines der Modelle des maschinellen Lernens ein Sequenzierungsmodell ist und wobei wenigstens eine der DTC-Regeln eine Sequenzregel ist, die einer Sequenz von DTC zugeordnet ist, die durch das Sequenzierungsmodell dahingehend identifiziert wurde, in Fahrtdatensätzen aufzutreten, die als fehlerhafte Fahrten gekennzeichnet sind, und nicht in Fahrtdatensätzen aufzutreten, die als gesunde Fahrten gekennzeichnet sind.

11. Das Verfahren zur Erzeugung eines DTC-Regelbuchs nach einem der Ansprüche 7-10, wobei die eine oder mehreren Teilmengen der gekennzeichneten Fahrtdatensätze eines oder mehrere der folgenden sind: Teilmengen von Daten der gekennzeichneten Fahrtdatensätze oder Teilmengen von Merkmalen der gekennzeichneten Fahrtdatensätze.

12. Das Verfahren zur Erzeugung eines DTC-Regelbuchs nach einem der Ansprüche 7-11, wobei die Erzeugung des wenigstens einen DTC-Regelbuchs durch Benutzer-Feedback unterstützt wird, das von einem Benutzer des Systems zur Erzeugung eines DTC-Regelbuchs gegeben wird.

13. Ein nichtflüchtiges computerlesbares Speichermedium, auf dem computerlesbarer Programmcode verkörpert ist, wobei der computerlesbare Programmcode durch eine Verarbeitungsschaltung eines Computers ausführbar ist, um ein Verfahren zur Erzeugung eines Regelbuchs für Diagnosefehlercodes (DTC) durchzuführen, wobei das Verfahren zur Erzeugung eines DTC-Regelbuchs Folgendes umfasst:
Erhalten, durch eine Verarbeitungsschaltung:
(A) eines oder mehrerer Telematik-Trace-Datensätze, die über einen Zeitraum von einem oder mehreren Fahrzeugen erhalten wurden, wobei wenigstens einer der einen oder mehreren Telematik-Trace-Datensätze Folgendes umfasst: eine Fahrzeug-ID, die die ID eines Fahrzeugs der einen oder mehreren Fahrzeuge angibt, von dem der wenigstens eine Telematik-Trace-Datensatz erhalten wird, einen gegebenen DTC, einen ersten Zeitstempel, der angibt, wann der gegebene DTC aufgetreten ist, und eine Zeitspanne, die angibt, wie lange der gegebene DTC aktiv ist, und
(B) einen oder mehrere Störungsereignis-Datensätze, die von den einen oder mehreren Fahrzeugen über zumindest einen Teil des Zeitraums erhalten wurden, wobei wenigstens einer der einen oder mehreren Störungsereignis-Datensätze Folgendes umfasst: eine Fahrzeug-ID, die die ID eines Fahrzeugs der einen oder mehreren Fahrzeuge angibt, bei dem eine gegebene Störung aufgetreten ist, einen zweiten Zeitstempel, der angibt, wann die gegebene Störung aufgetreten ist, und einen Störungscode, der eine Art der gegebenen Störung angibt; und
Extrahieren, durch die Verarbeitungsschaltung, eines oder mehrerer Fahrtdatensätze aus den erhaltenen einen oder mehreren Telematik-Trace-Datensätzen und den erhaltenen einen oder mehreren Störungsereignis-Datensätzen,
wobei wenigstens einer der einen oder mehreren Fahrtdatensätze für ein gegebenes Fahrzeug der einen oder mehreren Fahrzeuge ist, und wobei:
(i) für den Fall, dass dem gegebenen Fahrzeug keine Störungsereignis-Datensätze zugeordnet sind, der Fahrtdatensatz alle dem gegebenen Fahrzeug zugeordneten Telematik-Trace-Datensätze umfasst, (ii) für den Fall, dass dem gegebenen Fahrzeug ein Störungsereignis-Datensatz zugeordnet ist, der Fahrtdatensatz die dem gegebenen Fahrzeug zugeordneten Telematik-Trace-Datensätze umfasst, die vor dem zweiten Zeitstempel des einen Störungsereignis-Datensatzes aufgetreten sind, und (iii) für den Fall, dass dem gegebenen Fahrzeug zwei oder mehr Störungsereignis-Datensätze zugeordnet sind, der Fahrtdatensatz die dem gegebenen Fahrzeug zugeordneten Telematik-Trace-Datensätze umfasst, die zwischen den zweiten Zeitstempeln der zwei oder mehr Störungsereignis-Datensätze aufgetreten sind;
Kennzeichnen, durch die Verarbeitungsschaltung, wenigstens eines der einen oder mehreren Fahrtdatensätze als gesunde Fahrt oder fehlerhafte Fahrt, wobei ein Fahrtdatensatz, der einem gegebenen Fahrzeug zugeordnet ist, dem keine Störungsereignis-Datensätze zugeordnet sind, als gesunde Fahrt gekennzeichnet wird, andernfalls wird der Fahrtdatensatz als fehlerhafte Fahrt gekennzeichnet;
Trainieren, durch die Verarbeitungsschaltung, eines oder mehrerer Modelle des maschinellen Lernens mit einem oder mehreren Teilmengen der gekennzeichneten Fahrtdatensätze;
Bestimmen, durch die Verarbeitungsschaltung, einer oder mehrerer DTC-Regeln unter Verwendung wenigstens eines der trainierten Modelle des maschinellen Lernens, wobei: (i) wenigstens eines der Modelle des maschinellen Lernens ein Entscheidungsbaum-Modell ist, (ii) wenigstens eine der einen oder mehreren DTC-Regeln eine dem Entscheidungsbaum-Modell zugeordnete bedingte Regel ist, (iii) die bedingte Regel wenigstens eine Unterbedingung umfasst, nämlich dass der gegebene DTC für eine Zeitspanne aufgetreten ist, die über einem Zeitspannen-Schwellenwert liegt, und (iv) die wenigstens eine der einen oder mehreren DTC-Regeln einem gegebenen Modell des maschinellen Lernens und einer DTC-Regelpräzision zugeordnet ist, die einen Prozentsatz von Treffern angibt, die das Modell des maschinellen Lernens während des Trainings hatte; und
Erzeugen, durch die Verarbeitungsschaltung, wenigstens eines DTC-Regelbuchs, wobei das wenigstens eine DTC-Regelbuch eine oder mehrere der DTC-Regeln umfasst, die eine DTC-Regelpräzision über einem Präzisionsschwellenwert aufweisen, wobei die DTC-Regeln des erzeugten wenigstens einen DTC-Regelbuchs in einem menschenlesbaren Format angegeben sind, um einen manuellen oder halbmanuellen Musterabgleich und eine Bewertung durch Techniker zu ermöglichen.

## Revendications

1. Un système de génération de livre de règles (200) pour codes de défaut de diagnostic (DTC), le système de génération de livre de règles DTC (200) comprenant un circuit de traitement (230) configuré pour :
obtenir :
(A) un ou plusieurs enregistrements de données de traces télématiques obtenus à partir d'un ou de plusieurs véhicules sur une période de temps, dans lesquels au moins l'un des un ou plusieurs enregistrements de données de traces télématiques comprend : un ID de véhicule indiquant l'ID d'un véhicule des un ou plusieurs véhicules à partir desquels ledit au moins l'un des enregistrements de données de traces télématiques est obtenu, un DTC donné, un premier horodatage indiquant le moment où le DTC s'est produit, et une durée indiquant combien de temps le DTC est actif, et
(B) un ou plusieurs enregistrements de données d'occurrence de défaillance obtenus à partir des un ou plusieurs véhicules sur au moins une partie de ladite période de temps, dans lequel au moins l'un des un ou plusieurs enregistrements de données d'occurrence de défaillance comprend : un ID de véhicule indiquant l'ID d'un véhicule des un ou plusieurs véhicules sur lequel une défaillance donnée s'est produite, un second horodatage indiquant le moment où la défaillance donnée s'est produite, et un code de défaillance indiquant un type de la défaillance donnée ; et
extraire un ou plusieurs enregistrements de trajet à partir desdits un ou plusieurs enregistrements de données de traces télématiques obtenus et desdits un ou plusieurs enregistrements de données d'occurrence de défaillance obtenus, dans lequel au moins l'un des un ou plusieurs enregistrements de trajet est associé à un véhicule donné des un ou plusieurs véhicules,
et dans lequel : (i) dans le cas où il n'y a pas d'enregistrements de données d'occurrence de défaillance associés au véhicule donné, l'enregistrement de trajet comprend tous les enregistrements de données de traces télématiques associés au véhicule donné, (ii) dans le cas où un enregistrement de données d'occurrence de défaillance est associé au véhicule donné, l'enregistrement de trajet comprend les enregistrements de données de traces télématiques associés au véhicule donné qui se sont produits avant le second horodatage de l'un des enregistrements de données d'occurrence de défaillance, et (iii) dans le cas où il existe deux ou plusieurs enregistrements de données d'occurrence de défaillance associés au véhicule donné, l'enregistrement de trajet comprend les enregistrements de données de traces télématiques associés au véhicule donné qui se sont produits entre les seconds horodatages des au moins deux enregistrements de données d'occurrence de défaillance ;
étiqueter au moins l'un des un ou plusieurs enregistrements de trajet comme un trajet sans défaillance ou trajet avec défaillance, dans lequel un enregistrement de trajet associé à un véhicule donné pour lequel aucun enregistrement de données d'occurrence de défaillance n'est associée au véhicule donné est étiqueté comme trajet sans défaillance ; dans le cas contraire, l'enregistrement de trajet est étiqueté comme trajet avec défaillance ;
entraîner un ou plusieurs modèles d'apprentissage automatique sur un ou plusieurs sous-ensembles des enregistrements de trajets étiquetés ;
déterminer une ou plusieurs règles DTC à l'aide d'au moins un des modèles entraînés, dans lesquelles : (i) au moins l'un des modèles d'apprentissage automatique est un arbre de décision, (ii) au moins l'une des une ou plusieurs règles DTC est une règle conditionnelle associée à l'arbre de décision, (iii) la règle conditionnelle comprend au moins une sous-condition, selon laquelle le DTC s'est produit pendant une durée qui est supérieure à un seuil de durée, et (iv) au moins l'une des une ou plusieurs règles DTC est associée à un modèle d'apprentissage automatique donné et une précision de la règle DTC indiquant le pourcentage de résultats positifs obtenus par le modèle d'apprentissage automatique pendant l'entraînement ; et
générer au moins un livre de règles DTC, dans lequel au moins l'un livre de règles DTC comprend une ou plusieurs règles DTC ayant une précision de règle DTC supérieure à un seuil de précision,
dans lequel les règles DTC du au moins un livre de règles DTC généré sont exprimées dans un format lisible par un humain afin de permettre une mise en correspondance de motifs et une évaluation manuelle ou semi-manuelle par des techniciens.

2. Le système de génération de livre de règles DTC (200) selon la revendication 1, dans lequel au moins l'un des modèles d'apprentissage automatique sont un ou plusieurs parmi : un modèle de régression logistique, un modèle de séquencement, un modèle de réseau neuronal ou un modèle d'arbre à gradient boosté.

3. Le système de génération de livre de règles DTC (200) selon la revendication 2, dans lequel au moins un des modèles d'apprentissage automatique est un modèle de régression logistique, et dans lequel au moins une des règles DTC est une fiche de score comprenant : un ou plusieurs DTC associés aux enregistrements de trajets utilisés pour entraîner le modèle de régression logistique.

4. Le système de génération de livre de règles DTC (200) selon l'une quelconque des revendications 2-3, dans lequel au moins un des modèles d'apprentissage automatique est un modèle de séquencement, et dans lequel au moins une des règles DTC est une règle de séquence associée à une séquence de DTC identifiée par le modèle de séquencement qui apparaît dans les enregistrements de trajets étiquetés comme trajet avec défaillance et n'apparaît pas dans les enregistrements de trajets étiquetés comme trajet sans défaillance.

5. Le système de génération de livre de règles DTC (200) selon l'une quelconque des revendications précédentes, dans lequel un ou plusieurs sous-ensembles des enregistrements de trajet étiquetés sont un ou plusieurs parmi : des sous-ensembles de données desdits enregistrements de trajet étiquetés, ou des sous-ensembles de caractéristiques desdits enregistrements de trajet étiquetés.

6. Le système de génération de livre de règles DTC (200) selon l'une quelconque des revendications précédentes, dans lequel la génération du au moins un livre de règles DTC est assistée par un retour utilisateur fourni par un utilisateur du système de génération de livre de règles DTC (200).

7. Un procédé de génération de livre de règles de codes de diagnostic (DTC), le ou les livres de règles de codes DTC comprenant :
l'obtention, par un circuit de traitement :
(A) un ou plusieurs enregistrements de données de traces télématiques obtenus à partir d'un ou de plusieurs véhicules sur une période de temps, dans lesquels au moins un des enregistrements de données de traces télématiques comprend : un ID de véhicule indiquant l'ID d'un véhicule des un ou plusieurs véhicules à partir desquels ledit au moins l'un des un ou plusieurs enregistrements de données de trace télématique est obtenu, un DTC donné, un premier horodatage indiquant le moment où le DTC s'est produit, et un horodatage indiquant combien de temps le DTC est actif, et
(B) un ou plusieurs enregistrements de données d'occurrence de défaillance obtenus à partir des un ou plusieurs véhicules sur au moins une partie de ladite période de temps, dans lesquels au moins l'un des un ou plusieurs enregistrements de données comprend : un ID de véhicule indiquant l'ID d'un véhicule des un ou plusieurs véhicules sur lequel une défaillance donnée s'est produite, un second horodatage indiquant le moment où la défaillance donnée s'est produite, et un code de défaillance indiquant un type de la défaillance donnée ; et
extraire, par le circuit de traitement, un ou plusieurs enregistrements de trajet à partir des un ou plusieurs enregistrements de données de traces télématiques obtenus et desdits un ou plusieurs enregistrements de données d'occurrence de défaillance obtenus,
dans lequel l'un des un ou plusieurs desdits enregistrements de trajet est associé à un véhicule donné des un ou plusieurs véhicules, et dans lequel :
(i) dans le cas où il n'y a pas d'enregistrements de données d'occurrence de défaillance associés au véhicule donné, l'enregistrement de trajet comprend tous les enregistrements de données de traces télématiques associés au véhicule donné, (ii) dans le cas où un enregistrement de données d'occurrence de défaillance est associé au véhicule donné, l'enregistrement de trajet comprend les enregistrements de données de traces télématiques associés au véhicule donné qui se sont produits avant le second horodatage de l'un des enregistrements de données d'occurrence de défaillance, et (iii) dans le cas où il existe deux ou plusieurs enregistrements de données d'occurrence de défaillance associés au véhicule donné, l'enregistrement de trajet comprend les enregistrements de données de traces télématiques associés au véhicule donné qui se sont produits entre les seconds horodatages des deux ou plusieurs enregistrements de données d'occurrence de défaillance ;
étiqueter, par le circuit de traitement, au moins l'un des un ou plusieurs enregistrements de trajet comme un trajet sans défaillance ou trajet avec défaillance, dans lequel un enregistrement de trajet associé à un véhicule donné pour lequel aucun enregistrement de données d'occurrence de défaillance n'est associée au véhicule donné une étiquette comme trajet sans défaillance, dans le cas contraire, l'enregistrement de trajet est étiqueté comme trajet avec défaillance ;
entraîner, par le circuit de traitement, un ou plusieurs modèles d'apprentissage automatique sur un ou plusieurs sous-ensembles des enregistrements de trajets étiquetés ;
déterminer, par le circuit de traitement, une ou plusieurs règles DTC à l'aide d'au moins un des modèles entraînés, dans lesquelles : (i) au moins l'un des modèles d'apprentissage automatique est un arbre de décision, (ii) au moins une des une ou plusieurs règles DTC est une règle conditionnelle associée à l'arbre de décision, (iii) la règle conditionnelle comprend au moins une sous-condition, selon laquelle le DTC donné s'est produit pendant une durée supérieure à un seuil de durée, et (iv) l'au moins une des une ou plusieurs règles DTC est associée à un modèle d'apprentissage automatique donné et une précision de la règle DTC indiquant le pourcentage de résultats positifs obtenus par le modèle d'apprentissage automatique pendant l'entraînement ; et
générer, par le circuit de traitement, au moins un livre de règles DTC, dans lequel ledit au moins un livre de règles DTC comprend une ou plusieurs règles DTC ayant une précision de règle DTC supérieure à un seuil de précision, dans lequel les règles DTC du au moins un livre de règles DTC généré sont exprimées dans un format lisible par un humain afin de permettre une mise en correspondance de motifs et une évaluation manuelle ou semi-manuelle par des techniciens.

8. Le procédé de génération de livre de règles DTC selon la revendication 7, dans lequel au moins l'un des modèles d'apprentissage automatique sont un ou plusieurs parmi : un modèle de régression logistique, un modèle de séquencement, un modèle de réseau neuronal ou un modèle d'arbre à gradient boosté.

9. Le procédé de génération de livre de règles DTC selon la revendication 8, dans lequel au moins un des modèles d'apprentissage automatique est un modèle de régression logistique, et dans lequel au moins une des règles DTC est une fiche de score comprenant : un ou plusieurs DTC associés aux enregistrements de trajets utilisés pour entraîner le modèle de régression logistique.

10. Le procédé de génération de livre de règles DTC selon l'une quelconque des revendications 8 à 9, dans lequel au moins un des modèles d'apprentissage automatique est un modèle de séquencement, et dans lequel au moins une des règles DTC est une règle de séquence associée à une séquence de DTC identifiée par le modèle de séquencement qui apparaît dans les enregistrements de trajets étiquetés comme trajet avec défaillance et n'apparaît pas dans les enregistrements de trajets étiquetés comme trajet sans défaillance.

11. Le procédé de génération de livre de règles DTC selon l'une quelconque des revendications 7-10, dans lequel un ou plusieurs sous-ensembles des enregistrements de trajet étiquetés sont l'un ou plusieurs parmi : des sous-ensembles de données desdits enregistrements de trajet étiquetés, ou des sous-ensembles de caractéristiques desdits enregistrements de trajet étiquetés.

12. Le procédé de génération de livre de règles DTC selon l'une quelconque des revendications 7-11, dans lequel la génération du au moins un livre de règles DTC est assistée par un retour utilisateur fourni par un utilisateur du système de génération de livre de règles DTC.

13. Un support de stockage non transitoire lisible par ordinateur comprenant un code de programme informatique, ledit code de programme informatique étant exécutable par un circuit de traitement d'un ordinateur pour mettre en œuvre un procédé de génération de livre de codes de diagnostic (DTC), le procédé de génération de livre de règles DTC comprenant :
l'obtention, par un circuit de traitement :
(A) un ou plusieurs enregistrements de données de traces télématiques obtenus à partir d'un ou de plusieurs véhicules sur une période de temps, dans lesquels au moins l'un des un ou plusieurs enregistrements de données de traces télématiques comprend : un ID de véhicule indiquant l'ID d'un véhicule des un ou plusieurs véhicules à partir desquels ledit au moins un enregistrement de données de traces télématiques est obtenu, un DTC donné, un premier horodatage indiquant le moment où le DTC s'est produit, et une durée indiquant combien de temps le DTC est actif, et
(B) un ou plusieurs enregistrements de données d'occurrence de défaillance obtenus à partir des un ou plusieurs véhicules sur au moins une partie de ladite période de temps, dans lesquels au moins l'un des un ou plusieurs enregistrements de données d'occurrence de défaillance comprend : un ID de véhicule indiquant l'ID d'un véhicule des un ou plusieurs véhicules sur lequel une défaillance donnée s'est produite, un second horodatage indiquant le moment où la défaillance donnée s'est produite, et un code de défaillance indiquant le type de la défaillance donnée; et
extraire, par le circuit de traitement, un ou plusieurs enregistrements de trajet à partir desdits un ou plusieurs enregistrements de données de traces télématiques obtenus et desdits un ou plusieurs enregistrements de données d'occurrence de défaillance,
dans lequel au moins un des un ou plusieurs enregistrements de trajet est associé à un véhicule donné parmi lesdits véhicules, et dans lequel :
(i) dans le cas où il n'y a pas d'enregistrements de données d'occurrence de défaillance associés au véhicule donné, l'enregistrement de trajet comprend tous les enregistrements de données de traces télématiques associés au véhicule donné, (ii) dans le cas où un enregistrement de données d'occurrence de défaillance est associé au véhicule donné, l'enregistrement de trajet comprend les enregistrements de données de traces télématiques associés au véhicule donné qui se sont produits avant le second horodatage de l'un des enregistrements de données d'occurrence de défaillance, et (iii) dans le cas où il existe deux ou plusieurs enregistrements de données d'occurrence de défaillance associés au véhicule donné, l'enregistrement de trajet comprend les enregistrements de données de traces télématiques associés au véhicule donné qui se sont produits entre les seconds horodatages des au moins deux enregistrements de données d'occurrence de défaillance ;
étiqueter, par le circuit de traitement, au moins l'un des un ou plusieurs enregistrements de trajet comme un trajet sans défaillance ou trajet avec défaillance, dans lequel un enregistrement de trajet associé à un véhicule donné pour lequel aucun enregistrement de données d'occurrence de défaillance n'est associée au véhicule donné une étiquette comme trajet sans défaillance, dans le cas contraire, l'enregistrement de trajet est étiqueté comme trajet avec défaillance ;
entraîner, par le circuit de traitement, un ou plusieurs modèles d'apprentissage automatique sur un ou plusieurs sous-ensembles des enregistrements de trajets étiquetés ;
déterminer, par le circuit de traitement, une ou plusieurs règles DTC à l'aide d'au moins un des modèles entraînés, dans lesquelles : (i) au moins l'un des modèles d'apprentissage automatique est un arbre de décision, (ii) au moins une des une ou plusieurs règles DTC est une règle conditionnelle associée à l'arbre de décision, (iii) la règle conditionnelle comprend au moins une sous-condition, selon laquelle le DTC donné s'est produit pendant une durée supérieure à un seuil de durée, et (iv) l'au moins une des une ou plusieurs règles DTC est associée à un modèle d'apprentissage automatique et une précision de la règle DTC indiquant le pourcentage de résultats positifs obtenus par le modèle d'apprentissage automatique pendant l'entraînement ; et
générer, par le circuit de traitement, au moins un livre de règles DTC, dans lequel ledit au moins un livre de règles DTC comprend une ou plusieurs règles DTC ayant une précision de règle DTC supérieure à un seuil de précision, dans lequel les règles DTC du au moins un livre de règles DTC généré sont exprimées dans un format lisible par un humain afin de permettre une mise en correspondance de motifs et une évaluation manuelle ou semi-manuelle par des techniciens.
